# EUROPÄISCHE PATENTSCHRIFT

(11) **EP 3 914 500 B1**
(45) Veröffentlichungstag und Bekanntmachung des Hinweises auf die Patenterteilung: **18.10.2023**
(21) Anmeldenummer: 20707353.7
(22) Anmeldetag: 22.01.2020
(51) Int. Cl.: B62D 5/00, B62D 1/185

(54) **LENKSÄULE FÜR EIN STEER-BY-WIRE-LENKSYSTEM FÜR EIN KRAFTFAHRZEUG**
STEERING COLUMN FOR A STEER-BY-WIRE STEERING SYSTEM FOR A MOTOR VEHICLE
COLONNE DE DIRECTION POUR SYSTÈME DE DIRECTION À COMMANDE ÉLECTRIQUE POUR UN VÉHICULE À MOTEUR

(30) Priorität: 24.01.2019 DE 102019200908
(43) Veröffentlichungstag der Anmeldung: 01.12.2021
(73) Patentinhaber: thyssenkrupp Presta AG, 9492 Eschen (LI); thyssenkrupp AG, 45143 Essen (DE)
(72) Erfinder: FORTE, Sebastian, 9493 Mauren (LI)
(74) Vertreter: thyssenkrupp Intellectual Property GmbH
(86) Internationale Anmeldenummer: PCT/EP2020/051448
(87) Internationale Veröffentlichungsnummer: WO 2020/152188

(56) Entgegenhaltungen:
- EP-A1- 3 192 718
- WO-A1-2012/162708
- DE-A1- 10 033 810
- DE-A1-102009 017 054
- US-A1- 2019 016 365

## Beschreibung

### Stand der Technik

Die Erfindung betrifft eine Lenksäule für ein Steer-by-Wire-Lenksystem für ein Kraftfahrzeug, umfassend eine Manteleinheit, in der eine Lenkspindel um eine Längsachse drehbar aufgenommen ist, wobei die Manteleinheit ein koaxial in einem Außenmantelrohr teleskopartig in Richtung der Längsachse verschiebbar aufgenommenes Innenmantelrohr aufweist, und die Lenkspindel eine koaxial in einer Außenwelle drehmomentschlüssig, teleskopartig in Richtung der Längsachse verschiebbar aufgenommene Innenwelle aufweist, wobei die Lenkspindel mit einem Lenkrad verbindbar ist und mit einer Antriebseinheit eines Feedback-Aktuators gekuppelt ist, der einen Elektromotor zur Erzeugung und Einleitung eines Feedback-Drehmoments in die Lenkspindel aufweist, wobei die Antriebseinheit eine koaxial zur Längsachse angeordnete, zur Außenwelle hin offene Ausnehmung aufweist, die einen maximal einbeschriebenen Innendurchmesser hat, der größer ist als der Außendurchmesser der Außenwelle.

Steer-by-wire-Lenksysteme für Kraftfahrzeuge nehmen manuelle Lenkbefehle des Fahrers wie konventionelle mechanische Lenkungen durch Drehung eines Lenkrads entgegen, welches an der Lenksäule fahrerseitig am bezüglich der Fahrtrichtung hinteren Ende der Lenkspindel befestigt ist. Ein in die Lenkspindel eingebrachter Lenkbefehl wird mittels Drehwinkel- bzw. Drehmomentsensoren erfasst, und ein daraus erzeugtes elektrisches Steuersignal wird an einen Lenksteller abgeben, der mittels eines elektrischen Stellantriebs einen entsprechenden Lenkeinschlag der Räder einstellt.

Bei steer-by-wire-Systemen erhält der Fahrer von den gelenkten Rädern keine unmittelbare mechanische Rückmeldung über den Lenkstrang, welche bei konventionellen mechanisch gekoppelten Lenkungen als Reaktions- bzw. Rückstellmoment in Abhängigkeit von der Fahrbahnbeschaffenheit, der Fahrzeuggeschwindigkeit, dem aktuellen Lenkwinkel und weiterer Betriebszustände zum Lenkrad zurückgemeldet wird. Eine fehlende haptische Rückmeldung erschwert dem Fahrer jedoch, aktuelle Fahrsituationen sicher zu erfassen und angemessene Lenkmanöver durchzuführen, wodurch die Fahrzeuglenkbarkeit und damit die Fahrsicherheit beeinträchtigt werden.

Zur Erzeugung eines realistischen Fahrgefühls ist es im Stand der Technik bekannt, aus einer tatsächlichen momentanen Fahrsituation Parameter wie Fahrzeuggeschwindigkeit, Lenkwinkel, Lenkungs-Reaktionsmoment und dergleichen zu erfassen oder in einer Simulation zu berechnen, und aus diesen Größen ein Rückkopplungs-Signal zu bilden, welches in einen Feedback-Aktuator eingespeist wird. Der Feedback-Aktuator ist in die Lenksäule integriert und weist eine Aktuatoreinheit auf, die einen als Handmoment- oder Lenkradsteller dienenden elektrischen Stellantrieb mit einer Antriebseinheit umfasst. Die Antriebseinheit umfasst einen Elektromotor und koppelt abhängig vom Rückkopplungs-Signal ein dem realen Reaktionsmoment entsprechendes Rückstellmoment (Feedbackmoment) über die Lenkspindel in das Lenkrad ein. Derartige "Force-feedback"-Systeme geben dem Fahrer den Eindruck einer realen Fahrsituation wie bei einer konventionellen, mechanisch gekoppelten Lenkung, was eine intuitive Reaktion erleichtert.

Es ist bekannt, die Lenksäule in Längsrichtung, d.h. in Achsrichtung der Lenkspindel bzw. in Richtung der Längsachse, verstellbar zu gestalten, um im manuellen Fahrbetrieb das Lenkrad in Bedienposition für einen bequemen manuellen Lenkeingriff an die Fahrerposition anzupassen. Beim autonomen Fahren wird im autonomen Fahrbetrieb, in dem kein manueller Lenkeingriff erfolgt, die Lenksäule vorzugsweise so weit wie möglich längs zusammengeschoben, um das Lenkrad in eine Verstauposition außerhalb der Bedienposition zu bringen, so dass der Fahrzeuginnenraum für eine anderweitige Nutzung freigegeben wird. Zur Realisierung der Verstellung und Verstauung ist im Stand der Technik beispielsweise aus der DE 2015 007 280 A1 bekannt, dass die Manteleinheit eine längenveränderbare Teleskopanordnung mit mindestens einem in ein Außenmantelrohr eintauchenden Innenmantelrohr aufweist, und die entsprechend ebenfalls längenvariable Lenkspindel eine hohle Außenwelle und eine darin axial verschiebbar eintauchende Innenwelle aufweist, wobei das Lenkmoment über eine drehmomentschlüssige Verbindung übertragen wird, die beispielsweise unrunde Formschlusselemente aufweist.

Die vorbekannte Antriebseinheit weist einen Lenkwellenabschnitt auf, der über eine axiale Kupplung an das vordere Ende der Lenkspindel gekuppelt werden kann. Dadurch, dass die Länge dieses Lenkwellenabschnitts zur Länge der Lenkspindel addiert wird, ergibt sich eine relativ große Baulänge der Lenksäule, und zwar auch in der maximal zusammen gefahrenen Verstauposition.

Eine Lenksäule gemäß dem Oberbegriff des Anspruchs 1 ist aus der DE 100 33 810 A1 bekannt. Angesichts der vorangehend erläuterten Problematik ist es eine Aufgabe der vorliegenden Erfindung, bei einer Steer-by-Wire -Lenksäule eine kürzere Baulänge in der Verstauposition zu ermöglichen.

### Darstellung der Erfindung

Diese Aufgabe wird erfindungsgemäß gelöst durch eine Lenksäule mit den Merkmalen des Anspruchs 1. Vorteilhafte Weiterbildungen ergeben sich aus den Unteransprüchen. Erfindungsgemäß ist bei einer Lenksäule für ein Steer-by-Wire-Lenksystem für ein Kraftfahrzeug, umfassend eine Manteleinheit, in der eine Lenkspindel um ein Längsachse drehbar aufgenommen ist, wobei die Manteleinheit ein koaxial in einem Außenmantelrohr teleskopartig in Richtung der Längsachse verschiebbar aufgenommenes Innenmantelrohr aufweist, und die Lenkspindel eine koaxial in einer Außenwelle drehmomentschlüssig, teleskopartig in Richtung der Längsachse verschiebbar aufgenommene Innenwelle aufweist, wobei die Lenkspindel mit einem Lenkrad verbindbar ist und mit einer Antriebseinheit eines Feedback-Aktuators gekuppelt ist, der einen Elektromotor zur Erzeugung und Einleitung eines Feedback-Drehmoments in die Lenkspindel aufweist, wobei die Antriebseinheit eine koaxial zur Längsachse angeordnete, zur Außenwelle hin offene (=auf ihrer der Außenwelle zugewandten Seite) Ausnehmung aufweist, die einen maximal einbeschriebenen Innendurchmesser hat, der größer ist als der Außendurchmesser der Außenwelle, vorgesehen, dass der Innendurchmesser kleiner ist als der Außendurchmesser des Innenmantelrohrs.

Das Lenkrad ist an dem einen, bezüglich der Fahrtrichtung hinteren Ende der Lenkwelle angebracht. Die Antriebseinheit des Feedback-Aktuators ist an dem anderen, bezüglich der Fahrtrichtung vorderen Ende der Lenkwelle angeordnet. Dort wird das von dem Elektromotor erzeugte Rückstell- oder Feedbackmoment in den relativ zum Lenkrad teleskopartig verstellbaren Wellenteil eingekoppelt, bevorzugt in die im vorderen Bereich angeordnete Innenwelle, welche in das vordere Ende der im hinteren Bereich angeordnete Außenwelle verstellbar eintaucht, die als Hohlwelle ausgebildet ist und an ihrem hinteren Ende das Lenkrad trägt.

Der maximal einbeschriebene Durchmesser kann auch als der Durchmesser des sogenannten Pferchkreises bezeichnet werden, die entspricht dem maximalen Durchmesser eines freien, kreisförmigen Durchgangs durch die Ausnehmung. In einer bevorzugten Ausführungsform hat die Ausnehmung eine kreiszylindrische Grundform, bildet also mit anderen Worten als kreiszylindrische Öffnung aus, wobei in diesem Fall der maximal einbeschriebene Durchmesser dem Durchmesser der kreiszylindrischen Grundform, also dem Innendurchmesser der kreisrunden Öffnung der Ausnehmung entspricht. Die kreisrunde Öffnung ist bevorzugt koaxial zur Längsachse.

Falls die Außenwelle einen von einem Kreiszylinder abweichenden Außenquerschnitt aufweist, beispielsweise eine unrunde Form zur Realisierung einer drehmomentschlüssigen Verbindung mit der Innenwelle, wird unter dem Außendurchmesser der Außenwelle der Hüllkreisdurchmesser des unrunden Außenquerschnitts verstanden. Die erfindungsgemäße Lehre umfasst somit auch Außen- und/oder Innenwellen mit einem nicht kreiszylindrischen Außenquerschnitt, beispielsweise prismatisch, gezahnt oder mit einem sogenannten Kleeblattprofil, welches im Querschnitt bogenförmig geformte radiale Nuten und Vorsprünge hat.

Die erfindungsgemäße Ausnehmung mit einem maximal einbeschriebenen Durchmesser, der größer ist als der Außendurchmesser der Außenwelle ermöglicht es, dass die Außenwelle beim teleskopierenden Zusammenschieben der Lenksäule mit ihren vorderen Endbereich zumindest teilweise in das Antriebsbauteil eintaucht, d.h. axial einschiebbar ist. Dies kann beim Verstellen zur Verkürzung der Lenksäule erfolgen, insbesondere beim maximalen Zusammenschieben in der Verstauposition. Dabei ist ein besonderer Vorteil der Erfindung, dass die Lenkspindel einschließlich der Außenwelle in Richtung der Längsachse in der Antriebseinheit untergebracht ist, so dass kompakte Abmessungen mit einer kurzen Verstaulänge realisiert werden können, was insbesondere für den Einsatz beim autonomen Fahren vorteilhaft ist.

Im Crashfall kann die Lenksäule dadurch, dass ein Körper mit hoher kinetischer Energie auf das Lenkrad aufprallt, ebenfalls nachgeben und zusammengeschoben werden, um das Verletzungsrisiko zu verringern. Dabei wird die Lenkspindel ebenfalls zusammengefahren. Dank der Erfindung kann die Außenwelle in die Antriebseinheit eintauchen, so dass ein großer Verschiebeweg zur Verfügung steht, auf dem im Crashfall mittels geeigneter, in die Lenksäule integrierter, aus dem Stand der Technik bekannter Energieabsorptionsvorrichtungen der Körper kontrolliert abgebremst werden kann. Die von dem Feedback-Aktuator eingenommene Baulänge steht durch die Ausnehmung in der Antriebseinheit als Verschiebeweg für die Lenkwelle zu Verfügung, wodurch ein langer Verschiebeweg zur Energieabsorption bei einer kompakten Gesamtlänge ermöglicht wird.

Die Ausnehmung ist auf ihrer der Außenwelle zugewandten Seite offen, so dass die Außenwelle mit ihrem vorderen Ende nach vorn durch die Öffnung der Ausnehmung in den zwischen der Innenwelle und der Innenwandung der Ausnehmung gebildeten Ringraum eintauchen kann. Die Ausnehmung kann auf ihrer vorderen, der Manteleinheit abgewandten Seite der Antriebseinheit geschlossen sein, da bei einer Steer-by-Wire-Lenksäule die Lenkwelle in der Regel nicht nach vorn durch die Lenksäule hindurchgeführt sein muss. Die Ausnehmung kann bevorzugt als Blindöffnung ausgestaltet sein, die auf ihrem der Lenkwelle abgewandten Ende geschlossen ist. Dadurch kann eine becherförmige Anordnung gebildet werden, in welche der vordere, in die Blindöffnung eintauchende Endbereich der Lenkspindel gegen äu-ßere Einflüsse geschützt ist.

Erfindungsgemäß ist vorgesehen, dass der Innendurchmesser kleiner ist als der Außendurchmesser des Innenmantelrohrs. Das Innenmantelrohr hat von den Mantelrohren der Manteleinheit den kleinsten Außendurchmesser. Dadurch, dass die Ausnehmung im Durchmesser kleiner ist als das innere Mantelrohr, befindet sich nur die Lenkwelle in der Ausnehmung, und die Antriebseinheit kann mit kleineren Abmessungen gestaltet werden, was vorteilhaft im Hinblick auf eine kompakte Bauweise ist.

Es kann vorgesehen sein, dass die Länge des Innenmantelrohrs oder des Außenmantelrohrs kleiner ist als die Länge der Außenwelle. Dadurch, dass die Außenwelle erfindungsgemäß mit zumindest einem Teil ihrer Länge in die Ausnehmung eintauchen kann, kann sie bevorzugt in der zusammengeschobenen Verstauposition auch dann größtenteils in dem Innenmantelrohr oder Außenmantelrohr aufgenommen sein, wenn das Innen- oder Außenmantelrohr um die Länge der Ausnehmung kürzer ist als die Außenwelle. Durch das kürzere Innenmantelrohr können eine höhere Steifigkeit und kürzere Abmessung der Lenksäule in der zusammen geschobenen Verstauposition ermöglicht werden.

Eine vorteilhafte Ausführung der Erfindung sieht vor, dass mindestens ein Zwischenmantelrohr teleskopartig verstellbar zwischen Innenmantelrohr und Außenmantelrohr angeordnet ist. Weist die Manteleinheit nur ein Innen- und Außenmantelrohr, auf, wird ein Zweifach-Teleskop gebildet. Sind zwischen Innen- und Außenmantelrohr ein oder mehrere teleskopierbare Zwischenmantelrohre eingesetzt, wird ein Drei- oder Mehrfach-Teleskop gebildet. Dieses hat den Vorteil, dass bei einer gegebenen, maximal ausgefahrenen Betriebslänge der Manteleinheit eine kürzere Verstaulänge in der maximal zusammengeschobenen Verstauposition ermöglicht wird.

Bevorzugt kann der Innendurchmesser der Ausnehmung kleiner sein als der Außendurchmesser des Innenmantelrohrs, und bei einem Mehrfach-Teleskop besonders bevorzugt kleiner ist als der Außendurchmesser des Zwischenmantelrohrs, bei mehreren Zwischenmantelrohren kleiner als der des Zwischenmantelrohrs mit dem kleinsten Außendurchmesser. Dadurch kann die Antriebseinheit einen kleineren Durchmesser haben, und es wird eine kompakte Bauform ermöglicht.

Es kann vorgesehen sein, dass die Manteleinheit mit mindestens einem Zwischenmantelrohr als Drei- oder Mehrfachteleskop ausgebildet ist, wobei die Lenkwelle als Zweifach-Teleskop aus Innen- und Außenwelle ausgebildet ist. Dadurch weist die Lenkwelle weniger teleskopierbare Elemente auf als die Manteleinheit, und im Ergebnis kann eine höhere Steifigkeit der Lenksäule erreicht werden. Dabei kann die Verstaulänge dadurch, dass die Lenkwelle erfindungsgemäß zumindest teilweise in der Ausnehmung aufgenommen wird, in der zusammen geschobenen Verstauposition besonders kompakt gestaltet werden. Bei einer vorgegebenen Auszuglänge der Lenksäule, gemessen als Differenz zwischen der Länge in maximal ausgefahrenem und maximal eingefahrenem Zustand, kann bei dem Dreifach-Teleskop die jeweilige Länge von Außen-, Zwischen- und Innenmantelrohr kürzer sein als die jeweilige Länge der Außenwelle des Zweifach-Teleskops der Lenkspindel. Die Erfindung bietet hier den besonderen Vorteil, dass die Außenwelle über das Außenmantelrohr hinaus bis in die Ausnehmung in die Antriebseinheit hinein eingefahren werden kann. Dadurch, dass der Außendurchmesser des Innenmantelrohrs größer ist als der Innendurchmesser der Ausnehmung, kann dieses nicht in die Ausnehmung eingefahren werden, was aber durch das grö-ßere Auszugsverhältnis des Dreifach-Teleskops zwischen maximal ausgefahrenem und maximal eingefahrenem Zustand ausgeglichen wird. Dadurch kann dank der Erfindung bei hoher Steifigkeit ein hohes Auszugsverhältnis realisiert werden.

Es kann vorgesehen sein, dass die Antriebseinheit ein die Ausnehmung zumindest teilweise koaxial umgebendes Antriebsrad aufweist, welches mit der Lenkspindel kuppelbar ist, und von dem Elektromotor drehend antreibbar ist. Das Antriebsrad kann als Getrieberad ausgebildet sein welches über ein Getriebe mit dem Elektromotor verbunden ist. Das Getrieberad kann beispielsweise ein Schnecken-, Zahn- oder Riemenrad sein, welches als Hohlrad ausgebildet ist. Die erfindungsgemäße Ausnehmung befindet sich zumindest teilweise innerhalb der Öffnung, durch die sich die Lenkspindel erstrecken kann. Die koaxiale Anordnung des Antriebsrads ist vorteilhaft für einen kompakten Aufbau.

Das Antriebsrad kann mit der Innenwelle, bevorzugt drehfest, verbunden sein. Die Lenkspindel kann in ihrem vorderen, in die Ausnehmung axial eintauchenden Endbereich mit der Antriebseinheit verbunden sein. Die Innenwelle kann sich koaxial durch die Ausnehmung und das Getrieberad hindurch erstrecken, und in ihrem vorderen Endbereich, der sich im vorderen, der Lenkwelle abgewandten Endbereich der Ausnehmung befindet, über geeignete Verbindungsmittel fest oder lösbar mit dem Antriebsrad drehmomentschlüssig gekuppelt sein. Die Außenwelle ist durch axiale Verschiebung auf die Antriebseinheit zu in den freien Ringraum zwischen Innenwelle und Ausnehmung axial einschiebbar.

Das Getrieberad kann eine über den Umfang umlaufende Verzahnung aufweisen, die vorteilhaft aus einem Kunststoff ausgebildet sein kann, bespielsweise aus einem thermoplastischen Polymer, wie beispielsweise Polyoxymethylen (POM), Polypropylen (PP) oder dergleichen. Die Verzahnung kann im Kunststoff-Spritzgussverfahren gefertigt sein, und bevorzugt an ein vorzugsweise metallisches Kernelement, welches beispielsweise aus Stahl gefertigt ist und eine Nabe zur drehbaren Lagerung an der Lenksäule aufweist, angespritzt sein. Die Kunststoff-Verzahnung bietet eine hohe Laufruhe und einen verschleißarmen Betrieb, und das metallische Kernelement sorgt für hohe Steifigkeit und Belastbarkeit.

Alternativ kann das Antriebsrad auch integral mit dem Rotor des Elektromotors ausgebildet sein. Dadurch kann ein Direktantrieb realisiert werden, bei dem die Antriebseinheit einen den Rotor umgebenden Stator aufweist, und keine weiteren Getriebeglieder erforderlich sind.

Es kann vorgesehen sein, dass die Antriebseinheit an einem Außenmantelrohr angebracht ist. Dadurch wird das Feedback-Drehmoment an der Manteleinheit abgestützt. Die Anbringung an dem Außenmantelrohr ermöglicht einen bauraumsparenden Aufbau. Besonders vorteilhaft ist eine koaxiale Anordnung relativ zur Längsachse. Das Antriebsrad kann dabei bevorzugt an dem Außenmantelrohr um die Längsachse drehbar gelagert sein.

In einer vorteilhaften Ausführung kann die Manteleinheit ein glockenförmiges Gehäuse der Antriebseinheit aufweisen. Ein glockenförmiges, bevorzugt geschlossenes Gehäuse, welches einen relativ zum Außenmantelrohr vergrößerten Durchmesser hat, kann bevorzugt rotationssymmetrisch zur Längsachse ausgebildet und koaxial an dem Außenmantelrohr angebracht sein. In dem Gehäuse kann das Antriebsrad geschützt gelagert und mit der Lenkspindel verbunden sein. In einer vorteilhaften Ausführung kann das glockenförmige Gehäuse zumindest teilweise durch einen aufgeweiteten Abschnitt des Außenmantelrohrs gebildet werden, bevorzugt einstückig mit dem Außenmantelrohr integriert. Der aufgeweitete Abschnitt kann durch eine Umformung eines aus Blech, bevorzugt aus Stahlblech gefertigten Mantelrohrs gebildet werden, oder durch die integrale Formgestaltung bei einem als Gussteil ausgebildeten Mantelrohr, beispielsweise aus Aluminium- oder Magnesiumguss. Insbesondere durch einen integrierten Aufbau kann eine kompakte Bauform und eine wirtschaftliche Fertigung aus wenigen Einzelteilen realisiert werden. Alternativ kann das Gehäuse an das Mantelrohr angeflanscht sein oder stoffschlüssig mit diesem verbunden sein.

Zur Längsverstellung der Lenksäule kann vorgesehen sein, dass zwischen dem Innenmantelrohr und dem Außenmantelrohr ein motorischer Verstellantrieb angreift, der eingerichtet ist zur relativen Verschiebung in Richtung der Längsachse. Für die Längsverstellung wird ein linearer motorischer Stelltrieb zwischen dem inneren und äußeren Mantelrohr eingesetzt. Durch den Verstellantrieb können die Mantelrohre in Richtung der Längsachse relativ zueinander translatorisch bewegt werden, so dass das innere Mantelrohr relativ zum äußeren Mantelrohr teleskopierend aus- oder eingefahren wird. Der Verstellantrieb kann einen Spindeltrieb umfassen, mit einer auf einer Schraubspindel angeordneten Spindelmutter, und einem motorischen Antrieb, von dem die Schraubspindel und die Spindelmutter relativ zueinander drehend antreibbar sind. Derartige Verstellantriebe sind im Stand der Technik bekannt und gelten als zuverlässig und robust. Dabei ist die Spindelmutter an dem einen Mantelrohr in Richtung der Längsachse unverschieblich angebracht, und die Schraubspindel an einem dazu teleskopierbaren, anderen Mantelrohr. Von einem elektrischen Stellmotor wird vorzugsweise über ein geeignetes Getriebe, beispielsweise ein Schnecken- oder Riemengetriebe, die Spindelmutter oder die Schraubspindel drehend angetrieben, wodurch die relativ dazu bezüglich der Drehung feststehende Schraubspindel oder Spindelmutter translatorisch in Richtung der Spindellängsachse bewegt wird. Der Verstellantrieb kann zwischen dem Innen- und Außenmantelrohr angebracht sein, bei einem Mehrfach-Teleskop auch an einem Zwischenmantelrohr.

Es kann vorgesehen sein, dass mit der Manteleinheit eine Spanneinrichtung zusammenwirkt, die in eine Fixierstellung bringbar ist, in der sie das Innenmantelrohr relativ zur Außenmantelrohr festlegt, und in eine Freigabestellung, in der sie eine Verschiebung des Innenmantelrohrs relativ zum Außenmantelrohr freigibt. Die Spanneinrichtung kann manuell oder motorisch betätigbar sein. In der Freigabestellung kann eine Längsverstellung der Lenksäule durch teleskopierendes Ein-oder Ausfahren der Mantelrohre erfolgen. In Fixierstellung werden die Mantelrohre lösbar miteinander verbunden, beispielsweise durch kraftschlüssiges Verspannen oder Verklemmen, so dass die Länge der Teleskopanordnung und damit die Lenkradposition zur Bedienung im Fahrbetrieb festgelegt ist.

Bevorzugt ist die Manteleinheit in einer mit der Karosserie eines Kraftfahrzeugs verbindbaren Trageinheit gehalten. Die Trageinheit dient zur Montage der Lenksäule im Kraftfahrzeug und umfasst beispielsweise Konsolenteile, mit denen die Manteleinheit verbunden ist. Zur Einstellung der Lenkradposition kann die Manteleinheit relativ zur Trageinheit verstellbar sein. Zur Höhenverstellung kann die Manteleinheit beispielsweise um eine quer zur Längsachse liegende Schwenkachse verschwenkbar gelagert sein, so dass das am hinteren Ende der Lenkspindel angebrachte Lenkrad in der Höhe relativ zur Fahrerposition eingestellt werden kann. Die Höhenverstellung kann manuell erfolgen. Insbesondere zum automatisierten Verstauen der Lenksäule beim autonomen Fahren ist es vorteilhaft, dass ein elektrischer Höhenverstellantrieb mit der Trageinheit und der Stelleinheit verbunden ist, von dem die Manteleinheit relativ zur Trageinheit auf oder ab bewegbar ist. Ein Höhenverstellantrieb kann beispielsweise mittels eines elektromotorisch angetriebenen Spindeltriebs realisiert werden, wie vorangehend für die Längsverstellung beschrieben. Zur Fixierung der Höhenposition kann vorgesehen sein, dass die Manteleinheit mittels einer Spanneinrichtung, wie vorangehend für die Längsverstellung erläutert, lösbar mit der der Trageinheit verspannbar ist.

### Beschreibung der Zeichnungen

Vorteilhafte Ausführungsformen der Erfindung werden im Folgenden anhand der Zeichnungen näher erläutert. Im Einzelnen zeigen:
- Figur 1: ein Steer-by-Wire Lenksystem in einer schematischen Darstellung,
- Figur 2: eine erfindungsgemäße Lenksäule in einer schematischen perspektivischen Ansicht,
- Figur 3: die Lenksäule gemäß Figur 2 in einer weiteren perspektivischen Ansicht,
- Figur 4: die Lenksäule gemäß Figur 2 in einer teilweise aufgeschnittenen Darstellung,
- Figur 5: eine Querschnittsansicht der Lenksäule gemäß Figuren 2 bis 4,
- Figur 6: einen Längsschnitt durch die Lenksäule gemäß Figuren 2 bis 5 in ausgefahrenem Zustand,
- Figur 7: einen Längsschnitt durch die Lenksäule wie in Figur 6 in eingefahrenem Zustand,
- Figur 8: die Antriebseinheit der Lenksäule gemäß Figuren 2 bis 7 in einer freigestellten perspektivischen Teilansicht
- Figur 9: die Antriebseinheit gemäß Figur 8 in einer weiteren perspektivischen Ansicht,
- Figur 10: eine erfindungsgemäße Lenksäule in einer zweiten Ausführungsform in einer schematischen perspektivischen Ansicht,
- Figur 11: einen Längsschnitt durch die Lenksäule gemäß Figur 10 in ausgefahrenem Zustand,
- Figur 12: einen Längsschnitt durch die Lenksäule wie in Figur 11 in ausgefahrenem Zustand,
- Figur 13: eine Querschnittsansicht der Lenksäule gemäß Figuren 10 bis 12,
- Figur 14: die Lenksäule gemäß Figur 10 bis 13 in einer teilweise aufgeschnittenen Darstellung.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

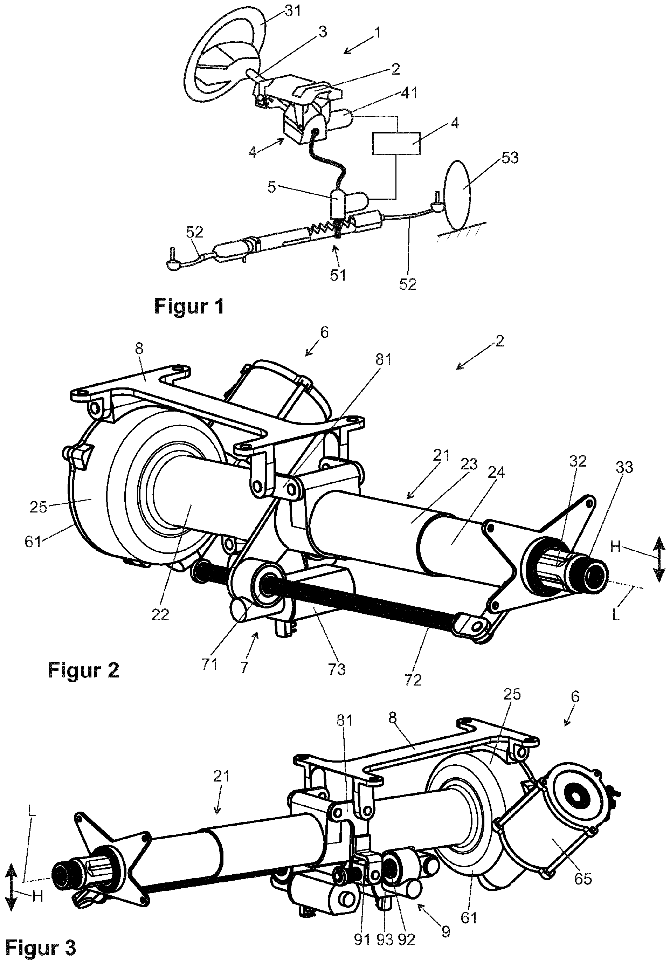

Figur 1 zeigt ein schematisiertes Steer-by-Wire-Lenksystem 1 für ein Kraftfahrzeug, mit einer Lenksäule 2, die an der nicht dargestellten Karosserie des Kraftfahrzeugs montierbar ist. In der Lenksäule 2 ist eine Lenkspindel 3 um ihre Längsachse L drehbar gelagert. Am bezüglich der Fahrtrichtung hinteren, dem Fahrer zugewandten Ende der Lenkspindel 3 ist ein Lenkrad 31 befestigt.

Eine Steuereinheit 4 ist über elektrische Steuerleitungen an einen Drehwinkelsensor 41 angeschlossen, der bei einem vom Fahrer durch Drehung des Lenkrads 31 eingebrachten Lenkbefehl einen Drehwinkel der Lenkspindel 3 erfasst. In Abhängigkeit von dem gemessenen Drehwinkel, und gegebenenfalls weiteren Parametern wie beispielsweise der Fahrzeuggeschwindigkeit, der Gierrate und dergleichen erzeugt die Steuereinheit 4 ein elektrisches Steuersignal, und steuert damit über elektrische Steuerleitungen einen elektromotorischen Lenksteller 5 an. Der Lenksteller 5 bewirkt über ein Lenkgetriebe 51 und damit verbundene Spurstangen 52 einen Lenkeinschlag der gelenkten Räder 53.

Die Lenksäule 2 weist einen mit der Lenkwelle 3 gekoppelten, elektrischen Feedback-Aktuator 6 auf, von dem in Abhängigkeit von der jeweiligen Fahrsituation ein Feedback-Moment in die Lenkspindel 3 eingekoppelt werden kann, welches die Rückwirkungen der Fahrbahn auf die Räder 53 simuliert und auf das Lenkrad 31 überträgt, um dem Fahrer eine Rückmeldung über das Lenk- und Fahrverhalten des Fahrzeugs zu geben.

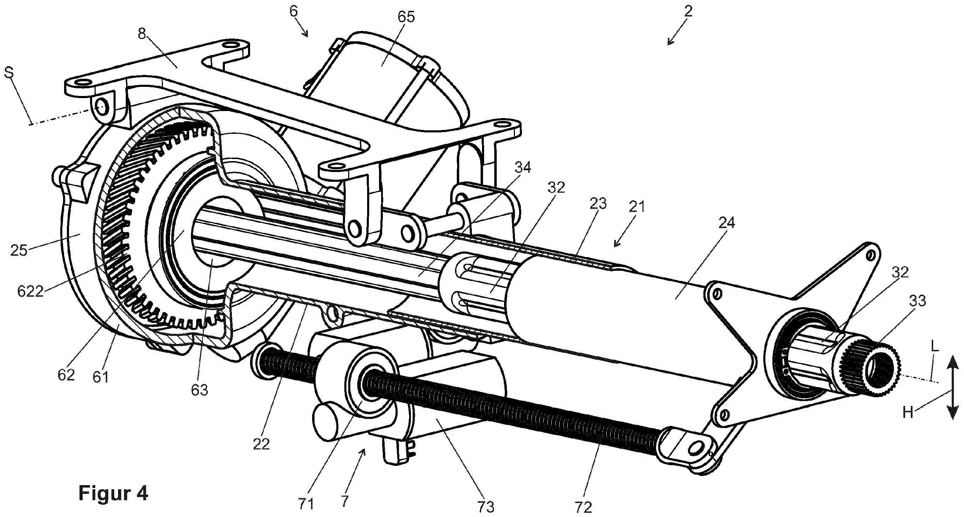

Die Lenksäule 2 ist in einer ersten Ausführung in den Figuren 2 bis 9 dargestellt.

Die Lenkspindel 3 ist um die Längsachse L drehbar in einer Manteleinheit 21 gelagert, die ein Außenmantelrohr 22 aufweist, in dem ein Zwischenmantelrohr 23 koaxial aufgenommen und in Richtung der Längsachse L teleskopartig verschiebbar angeordnet ist, im dem wiederum ein Innenmantelrohr 24 ebenfalls koaxial und in Richtung der Längsachse L teleskopartig verschiebbar angeordnet ist. Das Innenmantelrohr 24 hat einen Außendurchmesser M, bei einem unrunden Querschnitt ist dies der Durchmesser des Hüllkreises. Dadurch wird eine Dreifach-Teleskopanordnung der Manteleinheit 21 gebildet.

Die Lenkspindel 3 weist eine Außenwelle 32 auf, an deren hinteren, fahrerseitig aus dem Innenmantelrohr 24 vorstehenden Endbereich ein Befestigungsabschnitt 33 ausgebildet ist zur drehfesten Anbringung des Lenkrads 31. In die als Hohlwelle ausgebildete Außenwelle 32 taucht koaxial eine Innenwelle 34 in Richtung der Längsachse L teleskopartig verstellbar ein, so dass eine Zweifach-Teleskopanordnung gebildet wird. Die Innenwelle 34 und die Außenwelle 32 sind zur Übertragung des Lenkmoments drehmomentschlüssig miteinander verbunden, beispielsweise durch korrespondierende unrunde Querschnittsprofile, wie an sich von längenverstellbaren Wellen bekannte Mehrkantprofile oder in Längsrichtung erstreckte Nut-Zahnprofile oder dergleichen. Die Außenwelle 32 hat einen Außendurchmesser A, bei einem unrunden Querschnitt ist dies der Durchmesser des Hüllkreises. Die Innenwelle 34 erstreckt sich bis in den vorderen Endbereich der Manteleinheit 21.

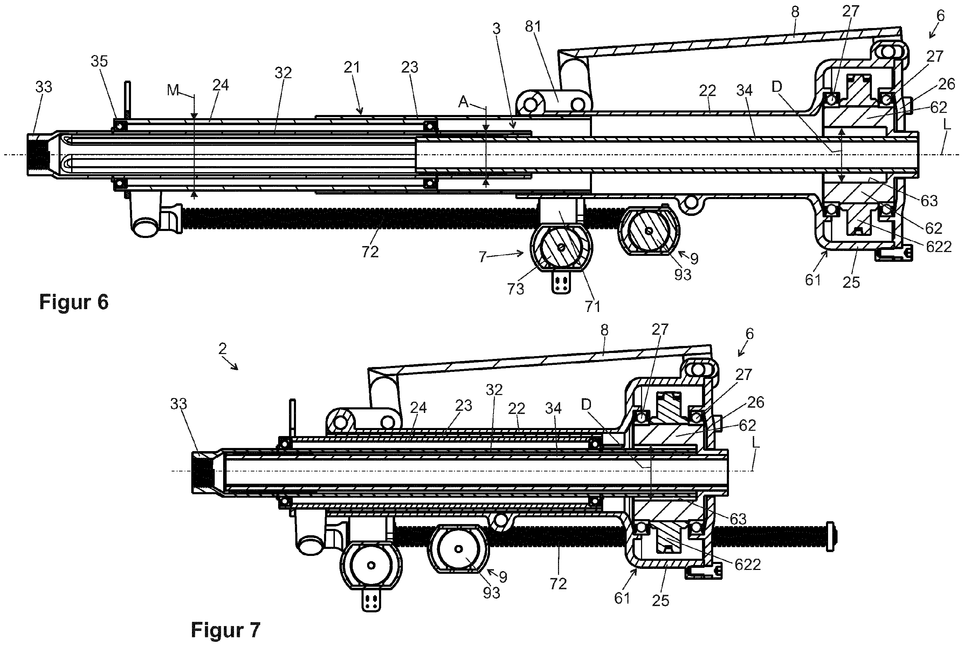

Der Längsschnitt in Figur 6 zeigt die Lenksäule 2 in ausgefahrenem Zustand, in dem das Zwischenmantelrohr 23 nach hinten, in Figur 6 nach links, aus dem Außenmantelrohr 22 in Längsrichtung vorstehend herausgeschoben ist, und das Innenmantelrohr 24 aus dem Zwischenmantelrohr 23 herausgeschoben ist. Die Außenwelle 32 ist in Lenkspindellagern 35, die bevorzugt als Wälzlager ausgebildet sind, in dem Innenmantelrohr 24 um die Längsachse L drehbar gelagert, und in Längsrichtung, d.h. in Richtung der Längsachse L unverschiebbar in dem Innenmantelrohr 24 gehalten, so dass es bei einer Längsverstellung zusammen mit diesem mitbewegt wird. Die Innenwelle 34 ist in Längsrichtung unverschiebbar in dem Außenmantelrohr 22 gelagert.

Figur 7 zeigt in derselben Längsschnittansicht den zusammengefahrenen Zustand der Lenksäule 2 , in dem das Zwischenmantelrohr 23 nach vorn, in Figur 7 nach rechts, in das Außenmantelrohr 22 eingeschoben ist, und das Innenmantelrohr 24 in das Zwischenmantelrohr 23 eingeschoben ist.

Der Feedback-Aktuator 6 ist im vorderen Bereich an dem Außenmantelrohr 22 an der Manteleinheit 21 angebracht und umfasst eine Antriebseinheit 61. Die Antriebseinheit 61 weist ein glockenförmiges Gehäuse 25 auf, welches nach vorn becherartig geöffnet an dem Außenmantelrohr 22 angebracht ist, und bevorzugt einstückig mit dem Außenmantelrohr 22 geformt ist, beispielsweise als Blechform- oder Metallgussteil, oder auch aus Kunststoffmaterial gefertigt sein kann. Auf der Öffnung des Gehäuses 25, welches einen größeren Durchmesser als das Außenmantelrohr 22 hat, ist vorne ein Lagerdeckel 26 angeflanscht.

Die Antriebseinheit 61 weist ein Antriebsrad 62 auf, welches koaxial zur Längsachse L in Lagern 27 in dem Gehäuse 25 drehbar gelagert ist. Dabei können die Durchmesser des Antriebsrads 62 und auch der Lager 27 größer sein als der Durchmesser des Außenmantelrohrs 22, wodurch eine besonders steife Lageranordnung realisierbar ist.

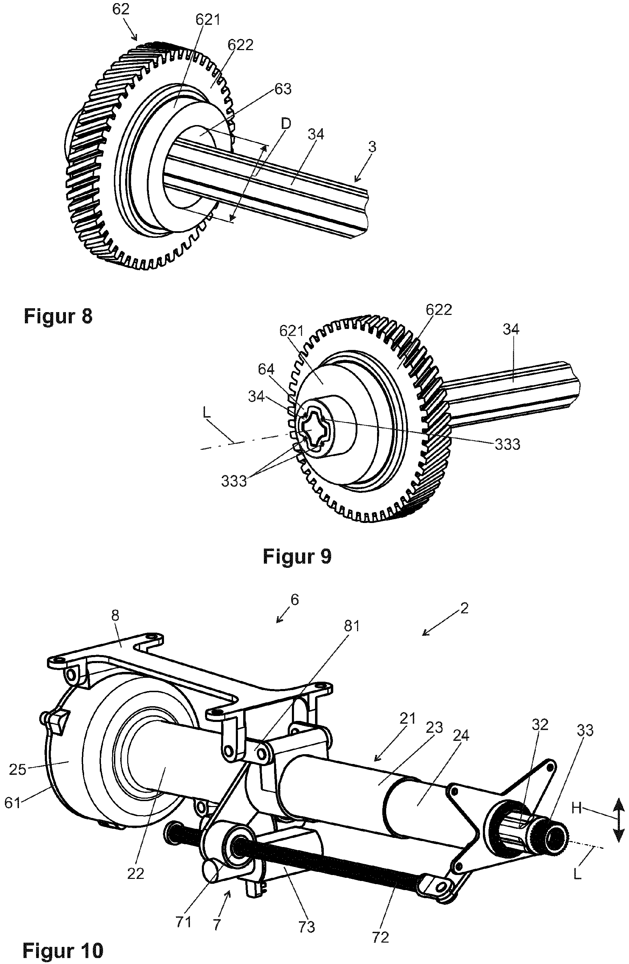

Wie in der freigestellten Darstellung der Figuren 8 und 9 erkennbar ist, weist das Antriebsrad 62 eine Nabe 621 mit einer außen umlaufenden Verzahnung 622 auf. Die Verzahnung 622 ist im dargestellten Beispiel als Schneckenverzahnung ausgebildet, und kann als Kunststoff-Umspritzung an der bevorzugt aus Stahl gefertigten Nabe 621 angespritzt sein. Die Nabe 621 und die Innenwelle 34 sind drehmomentschlüssig miteinander gekoppelt, wobei die Innenwelle 34 in Richtung der Längsachse L durch eine Verstemmung 333, welche als lokale plastische Deformation ausgebildet sind, in der Nabe 621 gesichert ist. Mit anderen Worten ist die Nabe 621 unverschiebbar gegenüber der Innenwelle 34.

Das Antriebsrad 62 weist eine koaxiale, im Beispiel zylindrische Ausnehmung 63 auf, die bezogen auf die Lenkspindel 3 axial zur Außenwelle 32 hin geöffnet ist, wie in den Figuren 6, 7 und 8 erkennbar ist. Die Innenwelle 34 erstreckt sich durch die Ausnehmung 63 axial hindurch, und ist in einem Verbindungsabschnitt 64 drehmomentschlüssig mit dem vorderen Endbereich der Innenwelle 34 verbunden. Durch den Verbindungsabschnitt 64 wird der zwischen der Innenwelle 34 und der Innenwandung der Ausnehmung 63 freibleibende Ringraum nach vorn geschlossen, so dass eine hohlzylindrische Blindöffnung gebildet wird.

Die Ausnehmung hat einen Innendurchmesser D, der größer ist als der Außendurchmesser A der Außenwelle 32. Dadurch kann die Außenwelle 32 im zusammengefahrenen Zustand, wie in Figur 7 dargestellt, nach vorn bis in das Antriebsrad 62 der Antriebseinheit 61 axial eintauchen. Dadurch, dass der Außendurchmesser M des Innenmantelrohrs 24 größer ist als der Innendurchmesser D, kann das Innenmantelrohr 24 nicht in die Ausnehmung 24 eintauchen, wie dies in Figur 7 erkennbar ist.

Aus Figur 7 ist erkennbar, dass die aus Innenmantelrohr 24, Zwischenmantelrohr 23 und Außenmantelohr 22 gebildete Anordnung in maximal zusammengefahrenem Zustand in Richtung der Längsachse L gemessen kürzer ist als die maximal in die Außenwelle 32 eingeschobene Innenwelle 34. Die Außenwelle 32 ist drehbar in dem Innenmantelrohr 24, welches auch als inneres Mantelrohr bezeichnet werden kann, gelagert, wobei die Außenwelle 32 über beide Enden des Innenmantelrohrs 24 hinaus ragt. Dadurch, dass die Außenwelle 32 in die Ausnehmung 63 des Antriebsrads 62 eintauchen kann, wird dennoch eine kurze Verstaulänge in zusammengefahrenem Zustand realisiert.

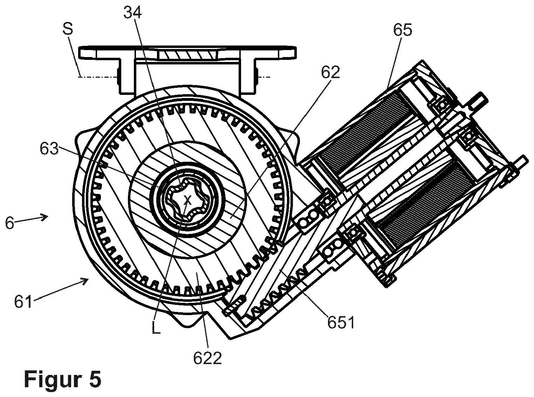

Zur Erzeugung des Feedback-Moments weist der Feedback-Aktuator 6 einen Motor 65 auf, nämlich einen Elektromotor, mit dessen Motorwelle eine Schnecke 651 gekuppelt ist. Aus der Querschnittansicht in Figur 5 ist ersichtlich, wie die Schnecke 651 mit der korrespondierenden Verzahnung 622 des Antriebsrads 62 kämmt.

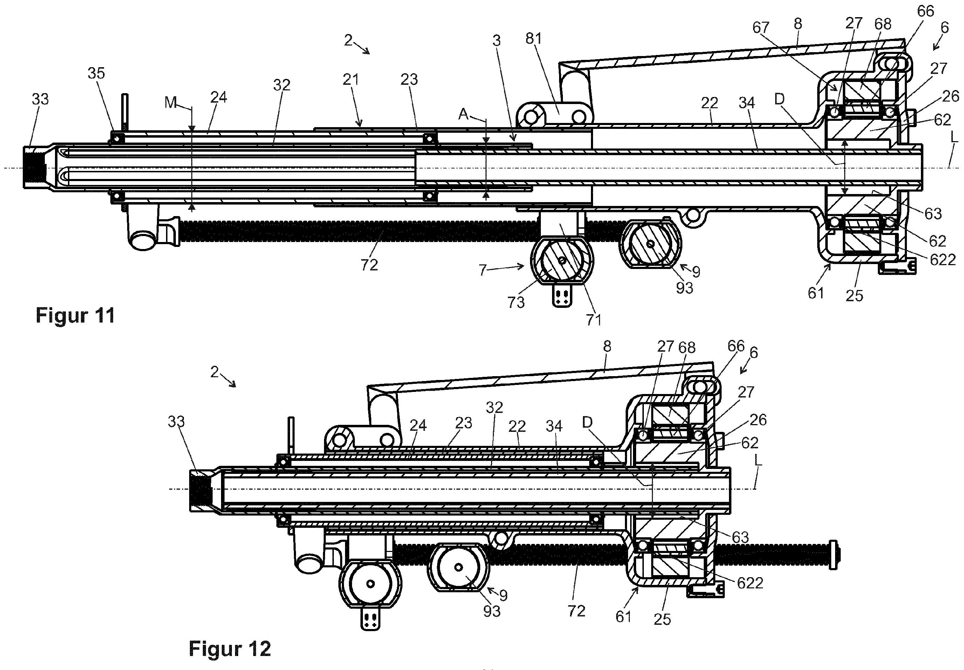

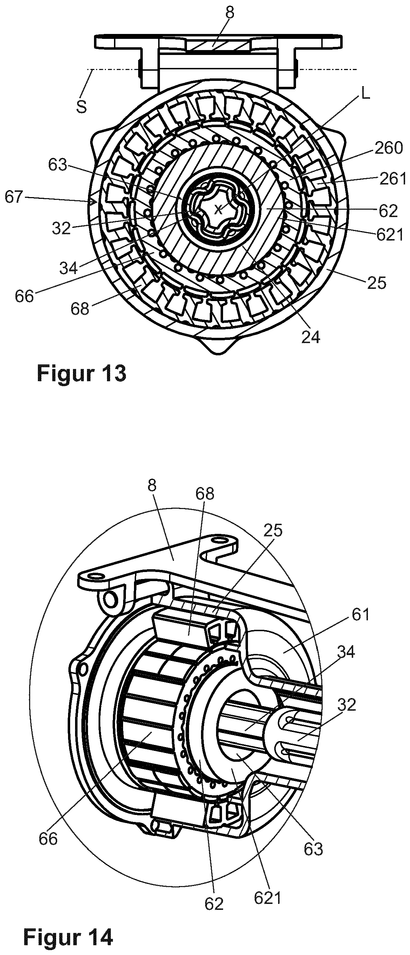

In den Figuren 10 bis 14 ist eine zweite Ausführungsform einer erfindungsgemäßen Lenksäule 2 dargestellt. Diese weist wie in der ersten Ausführung ein Antriebsrad 62 mit einer Nabe 621 auf, die jedoch keine Verzahnung aufweist, sondern auf der drehfest der Rotor 66 eines Motors 67 angeordnet ist, dessen Stator 68 koaxial drehfest in dem Gehäuse 25 angebracht ist. Das glockenförmige Gehäuse 25 bildet das Motorgehäuse. Das Antriebsrad 62 weist unmittelbar den Rotor 66 auf, bildet also quasi die Motorwelle, so dass ein Direktantrieb ohne weitere Getriebeglieder realisiert wird. Die Antriebseinheit 61 ist somit in einer kompakten Baueinheit in dem Gehäuse 25 integriert. Die Ausnehmung 63 und die damit verbunden Vorteile sind wie in der ersten Ausführungsvariante.

Zur Längsverstellung durch teleskopierendes Aus- oder Zusammenfahren der Manteleinheit 21 ist ein Verstellantrieb 7 vorgesehen, der als Spindeltrieb ausgebildet ist, mit einer Spindelmutter 71, in die eine Gewindespindel 72 eingeschraubt ist. Die Spindelmutter 71 ist von einem Stellmotor 73 relativ zur Gewindespindel 72 drehend antreibbar. Dadurch, dass die Spindelmutter 71 in Richtung der Längsachse L an dem Außenmantelrohr 22 abgestützt ist, und die Gewindespindel 72 an dem Innenmantelrohr 24 - oder umgekehrt - kann die Manteleinheit 21 je nach Drehrichtung des Stellmotors 73 motorisch zusammen oder auseinander gefahren werden.

Zur Anbringung an einer nicht dargestellten Karosserie eines Kraftfahrzeugs weist die Lenksäule 2 eine Trageinheit 8 auf, von der die Manteleinheit 21 gehalten ist. Zur Realisierung einer Höhenverstellung ist die Manteleinheit 21 um eine quer zur Längsachse L horizontal liegende Schwenkachse S verschwenkbar an der Trageinheit 8 gelagert. Bevorzugt kann die Schwenkachse S im Bereich des Gehäuses 25 im vorderen Bereich der Trageinheit 8 angeordnet sein. Im vorderen Bereich ist die Manteleinheit 21 über einen beweglichen Schwenkhebel 81 an der Trageinheit 8 angelenkt. Dadurch kann das am hinteren Ende angebrachte Lenkrad 31 um die Schwenkachse S in der Höhenrichtung H auf und ab bewegt werden.

Zur Höhenverstellung der Manteleinheit 21 relativ zur Trageinheit 8 ist ein Verstellantrieb 9 vorgesehen, der als Spindeltrieb ausgebildet ist, mit einer Spindelmutter 91, in die eine Gewindespindel 92 eingeschraubt ist und die von einem Stellmotor 93 relativ zur Spindelmutter 91 drehend antreibbar ist. Die Gewindespindel 92 ist in Richtung ihrer Achse an der Trageinheit 21 abgestützt, und die Spindelmutter 91 ist bezüglich der Drehung der Gewindespindel 92 feststehend an dem Schwenkhebel 81 angebracht und in Richtung der Achse der Gewindespindel 92 abgestützt. Durch drehenden Antrieb mittels des Stellmotors 93 kann der Schwenkhebel 81 bewegt, und dadurch die Manteleinheit 21 relativ zur Trageinheit 8 in der Höhenrichtung H aufwärts oder abwärts verstellt werden.

### Bezugszeichenliste

- 1: Lenksystem
- 2: Lenksäule
- 21: Manteleinheit
- 22: Außenmantelrohr
- 23: Zwischenmantelrohr
- 24: Innenmantelrohr
- 25: Gehäuse
- 26: Lagerdeckel
- 27: Lager
- 3: Lenkspindel
- 31: Lenkrad
- 32: Außenwelle
- 33: Befestigungsabschnitt
- 34: Innenwelle
- 35: Lenkspindellager

- 4: Steuereinheit
- 41: Drehwinkelsensor
- 5: Lenksteller
- 51: Lenkgetriebe
- 52: Spurstange
- 53: Rad
- 6: Feedback-Aktuator
- 61: Antriebseinheit
- 62: Antriebsrad
- 621: Nabe
- 622: Verzahnung
- 63: Ausnehmung
- 64: Verbindungsabschnitt
- 65: Motor
- 651: Schnecke
- 66: Rotor
- 67: Motor
- 68: Stator
- 7, 9: Verstellantrieb
- 71, 92: Spindelmutter
- 72, 92: Gewindespindel
- 73, 93: Stellmotor
- 8: Trageinheit
- 81: Schwenkhebel
- L: Längsachse
- A: Außendurchmesser
- D: Innendurchmesser
- S: Schwenkachse

## Patentansprüche

1. Lenksäule (2) für ein Steer-by-Wire-Lenksystem für ein Kraftfahrzeug, umfassend eine Manteleinheit (21), in der eine Lenkspindel (3) um eine Längsachse (L) drehbar aufgenommen ist, wobei die Manteleinheit (21) ein koaxial in einem Außenmantelrohr (22) teleskopartig in Richtung der Längsachse (L) verschiebbar aufgenommenes Innenmantelrohr (24) aufweist, und die Lenkspindel (3) eine koaxial in einer Außenwelle (32) drehmomentschlüssig, teleskopartig in Richtung der Längsachse (L) verschiebbar aufgenommene Innenwelle (34) aufweist, wobei die Lenkspindel (3) mit einem Lenkrad (31) verbindbar ist und mit einer Antriebseinheit (61) eines Feedback-Aktuators (6) gekuppelt ist, der einen Elektromotor (65, 67) zur Erzeugung und Einleitung eines Feedback-Drehmoments in die Lenkspindel (3) aufweist,
wobei die Antriebseinheit (61) eine koaxial zur Längsachse (63) angeordnete, zur Au-ßenwelle (32) hin offene Ausnehmung (63) aufweist, die einen maximal einbeschriebenen Innendurchmesser (D) hat, der größer ist als der Außendurchmesser (A) der Außenwelle (32), **dadurch gekennzeichnet, dass** der Innendurchmesser (D) kleiner ist als der Außendurchmesser (M) des Innenmantelrohrs (24).

2. Lenksäule nach Anspruch 1, **dadurch gekennzeichnet, dass** die Länge des Innenmantelrohrs (24) oder des Außenmantelrohrs (22) kleiner ist als die Länge der Au-ßenwelle (32).

3. Lenksäule nach einem der vorangehenden Ansprüche, **dadurch gekennzeichnet, dass** mindestens ein Zwischenmantelrohr (23) teleskopartig verstellbar zwischen Innenmantelrohr (24) und Außenmantelrohr (22) angeordnet ist.

4. Lenksäule nach einem der vorangehenden Ansprüche, **dadurch gekennzeichnet, dass** die Antriebseinheit (61) ein die Ausnehmung (63) zumindest teilweise koaxial umgebendes Antriebsrad (62) aufweist, welches mit der Lenkspindel (3) kuppelbar ist, und von dem Elektromotor (65, 67) drehend antreibbar ist.

5. Lenksäule nach Anspruch 4, **dadurch gekennzeichnet, dass** das Antriebsrad (62) mit der Innenwelle (34) verbunden ist.

6. Lenksäule nach einem der vorangehenden Ansprüche 4 bis 5, **dadurch gekennzeichnet, dass** das Antriebsrad (62) als Getrieberad ausgebildet ist, welches über ein Getriebe mit dem Elektromotor (65) verbunden ist.

7. Lenksäule nach einem der vorangehenden Ansprüche 4 bis 5, **dadurch gekennzeichnet, dass** das Antriebsrad (62) integral mit einem Rotor (66) des Elektromotors (67) ausgebildet ist.

8. Lenksäule nach einem der vorangehenden Ansprüche, **dadurch gekennzeichnet, dass** die Lenkspindel (3) in ihrem vorderen, in die Ausnehmung (63) axial eintauchenden Endbereich mit der Antriebseinheit (61) verbunden ist.

9. Lenksäule nach einem der vorangehenden Ansprüche, **dadurch gekennzeichnet, dass** die Antriebseinheit (61) an einem Außenmantelrohr (22) angebracht ist.

10. Lenksäule nach einem der vorangehenden Ansprüche, **dadurch gekennzeichnet, dass** die Manteleinheit (21) ein glockenförmiges Gehäuse (25) der Antriebseinheit (61) aufweist.

11. Lenksäule nach einem der vorangehenden Ansprüche, **dadurch gekennzeichnet, dass** zwischen dem Innenmantelrohr (24) und dem Außenmantelrohr (22) ein motorischer Verstellantrieb (7) angreift, der eingerichtet ist zur relativen Verschiebung in Richtung der Längsachse (L).

12. Lenksäule nach einem der vorangehenden Ansprüche, **dadurch gekennzeichnet, dass** mit der Manteleinheit (21) eine Spanneinrichtung zusammenwirkt, die in eine Fixierstellung bringbar ist, in der sie das Innenmantelrohr (24) relativ zur Außenmantelrohr (22) festlegt, und in eine Freigabestellung, in der sie eine Verschiebung des Innenmantelrohrs (24) relativ zum Außenmantelrohr (22) freigibt.

13. Lenksäule nach einem der vorangehenden Ansprüche, **dadurch gekennzeichnet, dass** die Manteleinheit (21) in einer mit der Karosserie eines Kraftfahrzeugs verbindbaren Trageinheit (8) gehalten ist.

14. Lenksäule nach einem der vorangehenden Ansprüche, **dadurch gekennzeichnet, dass** eine Energieabsorptionsvorrichtung zwischen den Mantelrohren (22, 23 ,24) und/oder zwischen einem der Mantelrohre (22, 23 ,24) und einer die Mantelrohre (22, 23 ,24) haltenden Trageinheit (8) angebracht ist.

## Claims

1. Steering column (2) for a steer-by-wire steering system for a motor vehicle, comprising a jacket unit (21) in which a steering spindle (3) is accommodated so as to be rotatable about a longitudinal axis (L), the jacket unit (21) having an inner jacket tube (24) accommodated coaxially in an outer jacket tube (22) so as to be telescopically displaceable in the direction of the longitudinal axis (L), and the steering spindle (3) having an inner shaft (34) accommodated coaxially in an outer shaft (32) so as to be torque-locking, telescopically displaceable in the direction of the longitudinal axis (L), wherein the steering spindle (3) can be connected to a steering wheel (31) and is coupled to a drive unit (61) of a feedback actuator (6), which has an electric motor (65, 67) for generating and introducing a feedback torque into the steering spindle (3), the drive unit (61) having a recess (63) which is arranged coaxially with respect to the longitudinal axis (63), is open towards the outer shaft (32) and has a maximum inscribed inside diameter (D) which is larger than the outside diameter (A) of the outer shaft (32), **characterized in that** the inside diameter (D) is smaller than the outside diameter (M) of the inner jacket tube (24).

2. Steering column according to claim 1, **characterized in that** the length of the inner jacket tube (24) or the outer jacket tube (22) is less than the length of the outer shaft (32).

3. Steering column according to one of the preceding claims, **characterized in that** at least one intermediate jacket tube (23) is telescopically adjustably arranged between inner jacket tube (24) and outer jacket tube (22).

4. Steering column according to one of the preceding claims, **characterized in that** the drive unit (61) has a drive wheel (62) which at least partially coaxially surrounds the recess (63), can be coupled to the steering spindle (3), and can be driven in rotation by the electric motor (65, 67).

5. Steering column according to claim 4, **characterized in that** the drive wheel (62) is connected to the inner shaft (34).

6. Steering column according to one of the preceding claims 4 to 5, **characterized in that** the drive wheel (62) is designed as a gear wheel which is connected to the electric motor (65) via a gearbox.

7. A steering column according to any one of the preceding claims 4 to 5, **characterized in that** the drive wheel (62) is integrally formed with a rotor (66) of the electric motor (67).

8. Steering column according to one of the preceding claims, **characterized in that** the steering spindle (3) is connected to the drive unit (61) in its front end region which plunges axially into the recess (63).

9. Steering column according to any one of the preceding claims, **characterized in that** the drive unit (61) is attached to an outer casing tube (22).

10. Steering column according to one of the preceding claims, **characterized in that** the jacket unit (21) comprises a bell-shaped housing (25) of the drive unit (61).

11. Steering column according to one of the preceding claims, **characterized in that** a motorized adjusting drive (7) engages between the inner jacket tube (24) and the outer jacket tube (22), which is set up for relative displacement in the direction of the longitudinal axis (L).

12. Steering column according to one of the preceding claims, **characterized in that** a clamping device cooperates with the jacket unit (21), which clamping device can be brought into a fixing position, in which it fixes the inner jacket tube (24) relative to the outer jacket tube (22), and into a release position, in which it releases a displacement of the inner jacket tube (24) relative to the outer jacket tube (22).

13. Steering column according to one of the preceding claims, **characterized in that** the jacket unit (21) is held in a support unit (8) which can be connected to the body of a motor vehicle.

14. A steering column according to any one of the preceding claims, **characterized in that** an energy absorption device is mounted between the jacket tubes (22, 23, 24) and/or between one of the jacket tubes (22, 23, 24) and a support unit (8) holding the jacket tubes (22, 23, 24).

## Revendications

1. Colonne de direction (2) pour un système de direction Steer-by-Wire pour un véhicule automobile, comprenant une unité d'enveloppe (21) dans laquelle un arbre de direction (3) est logé de manière à pouvoir tourner autour d'un axe longitudinal (L), l'unité d'enveloppe (21) présentant un tube d'enveloppe intérieur (24) logé coaxialement dans un tube d'enveloppe extérieur (22) de manière à pouvoir coulisser de façon télescopique dans la direction de l'axe longitudinal (L), et l'arbre de direction (3) présentant un tube d'enveloppe extérieur (24) logé coaxialement dans un arbre extérieur (32) de manière à être solidaire en rotation, l'arbre de direction (3) pouvant être relié à un volant de direction (31) et étant couplé à une unité d'entraînement (61) d'un actionneur à rétroaction (6), qui présente un moteur électrique (65, 67) pour générer et introduire un couple de rétroaction dans l'arbre de direction (3),
l'unité d'entraînement (61) présentant un évidement (63) disposé coaxialement à l'axe longitudinal (63) et ouvert vers l'arbre extérieur (32), lequel évidement a un diamètre intérieur (D) inscrit maximal qui est supérieur au diamètre extérieur (A) de l'arbre extérieur (32), **caractérisé en ce que** le diamètre intérieur (D) est inférieur au diamètre extérieur (M) du tube d'enveloppe intérieur (24).

2. Colonne de direction selon la revendication 1, **caractérisée en ce que** la longueur du tube d'enveloppe intérieure (24) ou du tube d'enveloppe extérieure (22) est inférieure à la longueur de l'arbre extérieur (32).

3. Colonne de direction selon l'une des revendications précédentes, **caractérisée en ce qu'**au moins un tube d'enveloppe intermédiaire (23) est disposé de manière réglable de façon télescopique entre le tube d'enveloppe intérieur (24) et le tube d'enveloppe extérieur (22).

4. Colonne de direction selon l'une des revendications précédentes, **caractérisée en ce que** l'unité d'entraînement (61) présente une roue d'entraînement (62) entourant au moins partiellement de manière coaxiale l'évidement (63), qui peut être couplée à l'arbre de direction (3), et qui peut être entraînée en rotation par le moteur électrique (65, 67).

5. Colonne de direction selon la revendication 4, **caractérisée en ce que** la roue motrice (62) est reliée à l'arbre intérieur (34).

6. Colonne de direction selon l'une des revendications 4 à 5 précédentes, **caractérisée en ce que** la roue motrice (62) est une roue de transmission reliée au moteur électrique (65) par un engrenage.

7. Colonne de direction selon l'une quelconque des revendications 4 à 5 précédentes, **caractérisée en ce que** la roue motrice (62) est formée d'un seul tenant avec un rotor (66) du moteur électrique (67).

8. Colonne de direction selon l'une des revendications précédentes, **caractérisée en ce que** l'arbre de direction (3) est relié à l'unité d'entraînement (61) dans sa zone d'extrémité avant qui s'enfonce axialement dans l'évidement (63).

9. Colonne de direction selon l'une des revendications précédentes, **caractérisée en ce que** l'unité d'entraînement (61) est montée sur un tube d'enveloppe extérieure (22).

10. Colonne de direction selon l'une des revendications précédentes, **caractérisée en ce que** l'unité d'enveloppe (21) comprend un boîtier en forme de cloche (25) de l'unité d'entraînement (61).

11. Colonne de direction selon l'une des revendications précédentes, **caractérisée en ce qu'**entre le tube d'enveloppe intérieure (24) et le tube d'enveloppe extérieure (22) s'engage un entraînement de réglage motorisé (7) qui est agencé pour se déplacer relativement dans la direction de l'axe longitudinal (L).

12. Colonne de direction selon l'une des revendications précédentes, **caractérisée en ce qu'**un dispositif de serrage coopère avec l'unité d'enveloppe (21) et peut être amené dans une position de fixation, dans laquelle il immobilise le tube d'enveloppe intérieure (24) par rapport au tube d'enveloppe extérieure (22), et dans une position de libération, dans laquelle il libère un déplacement du tube d'enveloppe intérieure (24) par rapport au tube d'enveloppe extérieure (22).

13. Colonne de direction selon l'une des revendications précédentes, **caractérisée en ce que** l'unité d'enveloppe (21) est maintenue dans une unité de support (8) pouvant être reliée à la carrosserie d'un véhicule automobile.

14. Colonne de direction selon l'une des revendications précédentes, **caractérisée en ce qu'**un dispositif d'absorption d'énergie est monté entre les tubes d'enveloppe (22, 23, 24) et/ou entre l'un des tubes d'enveloppe (22, 23, 24) et une unité de support (8) maintenant les tubes d'enveloppe (22, 23, 24).
